# EUROPEAN PATENT APPLICATION

(11) **EP 1 443 463 A1**
(43) Date of publication of application: **04.08.2004**
(21) Application number: 02777968.5
(22) Date of filing: 25.10.2002
(51) Int. Cl.: G06T 13/00

(54) **CELLULAR TERMINAL, METHOD FOR CREATING ANIMATION ON CELLULAR TERMINAL, AND ANIMATION CREATION SYSTEM**

(30) Priority: 29.10.2001 JP 2001331109
(71) Applicant: Sharp Kabushiki Kaisha, Osaka-shi, Osaka 545-8522 (JP)
(72) Inventor: MINAKUCHI, Mitsuru, Soraku-gun, Kyoto 619-0241 (JP); UEDA, Hirotaka, Nara-shi, Nara 630-8105 (JP); SAKAKURA, Kentaro, Tenri-shi, Nara 632-0004 (JP)
(74) Representative: Brown, Kenneth Richard
(86) International application number: PCT/JP2002/011121
(87) International publication number: WO 2003/038759

(57) **Abstract**

The animation generating method includes the step (S102) of reading a plurality of animation templates, the step (S104) of outputting the animation templates on a display unit in response to a user's request, the step (S108) of, when the user designates an animation template (YES in S106), extracting components included in the animation template, the step (S110) of extracting modification methods corresponding to the extracted components, the step (S116) of designating the modification methods for the components included in the designated animation template, and the step of generating animation data based on the designated animation template and the modified components

## Description

### Technical Field

The present invention relates to a technique assisting a user to generate an animation using a computer, and more particularly to a technique assisting a user to generate an animation using a mobile terminal that is restricted in operation due to its compactness to ensure its portability.

### Background Art

With development of mobile phones and establishment of communication networks, the mobile phones are now in daily use. They are sometimes used even for fun by the younger generation. For example, one may use a mobile phone equipped with a compact CCD (Charge Coupled Device) camera, take his/her facial portrait and send it as an attachment to e-mail.

Regarding the use of the mobile phone for fun, there is an increasing demand for displaying an animation on the mobile phone with advance in display capability thereof. Conventionally, there is known a device capable of readily generating an animation as requested by a user employing a computer. Japanese Patent Laying-Open No 8-263681 discloses such an animation generating device.

The animation generating device disclosed in the publication includes a parts storage portion that prestores parts or components constituting the animation and motions of the parts; a story storage portion that prestores a semi-finished story including a plurality of candidates for changing the expression; a script storage portion that prestores a script including a synthesizing method of the parts stored in the parts storage portion and a rule for changing the expression of the script; an input portion for input of the candidate for changing the expression selected by the user from the plurality of candidates stored in the story storage portion; a story finishing portion that finishes the story based on the candidate for changing the expression selected by the user; a script generating portion that generates the script based on the script stored in the script storage portion and the rule for changing the expression, so as to express the finished story as an animation; a parts synthesizing portion that synthesizes the parts necessary for execution of the script generated by the script generating portion; a script executing portion that executes the script generated by the script generating portion for the animation parts synthesized in the parts synthesizing portion to generate the animation; and an output portion that outputs the animation generated by the script executing portion.

According to the device, the user selects a change of the season of the story, for example, based on the semi-finished story. In this case, the background appearing in the story is changed to scenery of the selected season, and the clothes of the characters in the story are changed to those corresponding to the selected season. The animation is generated using the background and the parts thus changed.

With this device, however, all the candidates for changing the expression relate to the semi-finished story. The user cannot generate an animation freely. In addition, the semi-finished story prepared for the animation may not suit the taste of the user. Further, if a large number of semi-finished stories are stored, it will be difficult for the user to select suitable one therefrom according to what he/she wants to generate. Still further, even if this device is adapted to a mobile phone, an interface allowing a user to readily generate an animation cannot be implemented with the mobile phone having a smaller display screen and smaller storage capacity than and inferior in processing capability to a computer.

Based on the foregoing, an object of the present invention is to provide a mobile terminal capable of generating an animation requested by a user, a method for generating an animation in the mobile terminal, and an animation system.

Another object of the present invention is to provide a mobile terminal capable of readily generating an animation requested by a user, a method for generating an animation in the mobile terminal, and an animation system.

A further object of the present invention is to provide a mobile terminal capable of readily generating an animation requested by a user even if there is a limitation in user interface, a method for generating an animation in the mobile terminal, and an animation system.

A still further object of the present invention is to provide a mobile terminal capable of readily generating an animation in accordance with various requests of a user, a method for generating an animation in the mobile terminal, and an animation system.

Yet another object of the present invention is to provide a mobile terminal enabling a user to show an animation generated by the user to another person, a method for generating an animation in the mobile terminal, and an animation system.

### Disclosure of the Invention

A mobile terminal according to an aspect of the present invention includes animation data storage means for storing a plurality of pieces of animation data each including parts data representing a part corresponding to a component constituting an animation and motion data representing motion of the part, storage means for storing information for modification of the parts data; display means for displaying the animation based on the animation data, input means for a user to input information for selecting a first animation requested by the user from among the animations displayed on the display means; modification means for modifying the parts data representing the part corresponding to the component of the input first animation based on the information stored in the storage means, generation means connected to the modification means and the animation data storage means for generating second animation data based on the modified parts data and the motion data included in the animation data corresponding to the first animation, and control means connected to the display means and the generation means for controlling the display means and the generation means to display a second animation based on the generated second animation data.

According to the mobile terminal of this configuration, the user selects a favorite animation as a first animation from among a plurality of animations displayed on the display means of the mobile terminal. The modification means modifies the parts data included in the first animation in response to a user's request, for example. The generation means generates the second animation data having the motions of the modified parts data defined by the motion data included in the animation data corresponding to the first animation. The display means displays the generated second animation in accordance with a user's request. As such, the user can select the first animation from among the animations displayed in advance, and generate the second animation having the parts data included in the first animation modified. As a result, it is possible to provide a mobile terminal capable of readily generating an animation requested by a user even in the case of a mobile phone or the like that is limited in user interface.

A mobile terminal according to another aspect of the present invention includes animation data storage means for storing a plurality of pieces of animation data each including parts type data representing a type of a part corresponding to a component constituting an animation and motion data representing motion of the part; input means for a user to input parts data representing the part requested by the user; retrieval means connected to the animation data storage means and the input means for retrieving first animation data from among the plurality of pieces of animation data that includes the parts type data corresponding to the type of the part represented by the input parts data; generation means connected to the animation data storage means, the input means and the retrieval means for generating second animation data based on the input parts data and the motion data included in the first animation data; and display means connected to the generation means for displaying a second animation based on the generated second animation data.

According to the mobile terminal of this configuration, the user inputs the parts data to be used in the animation. The animation data storage means stores motion data representing motions of the parts and parts type data indicating types of the parts. The parts type data includes, for example, "graphic symbol" when the part is a graphic symbol, "character string" when the part is a message, and "background" when the part is a background image The motion data defines different motions for the parts of different types Motion of the part of the type not included in the animation data cannot be defined by the motion data of the relevant animation data. The retrieval means retrieves first animation data from among the plurality of pieces of animation data that includes the parts type data corresponding to the type of the part input by the user. The generation means generates the second animation data having the motions of the input parts data defined by the motion data included in the first animation data. The display means displays the second animation generated in response to the user's request. As such, the user only needs to designate a part that he/she wants to user in an animation, and the animation data including the relevant part is retrieved and the second animation data is generated based thereon. As a result, it is possible to provide a mobile terminal capable of readily generating an animation requested by a user even in the case of a mobile phone or the like that is restricted in user interface.

A mobile terminal according to a further aspect of the present invention includes: animation data storage means for storing a plurality of pieces of animation data each including parts type data representing a type of a part corresponding to a component constituting an animation and motion data representing motion of the part; keyword storage means for storing parts data representing the part and a keyword corresponding to the part; input means for a user to input the keyword corresponding to the part requested by the user; first retrieval means connected to the keyword storage means and the input means for retrieving the parts data corresponding to the input keyword; second retrieval means connected to the animation data storage means and the first retrieval means for retrieving first animation data from among the plurality of pieces of animation data that includes the parts type data corresponding to the type of the part represented by the parts data retrieved by the first retrieval means; generation means connected to the animation data storage means and the second retrieval means for generating second animation data based on the retrieved parts data and the motion data included in the first animation data; and display means connected to the generation means for displaying a second animation based on the generated second animation data.

According to the mobile terminal of this configuration, the user inputs a keyword for retrieval of parts data. The first retrieval means retrieves the parts data based on the input keyword. The animation data storage means stores motion data representing motions of the parts and parts type data indicating types of the parts. The motion data define different motions for the parts of different types. Motion of the part of the type not included in the animation data cannot be defined by the motion data of the relevant animation data. The second retrieval means retrieves from among the plurality of pieces of animation data the first animation data including the parts type data corresponding to the type of the part retrieved by the first retrieval means. The generation means generates second animation data having the motion of the retrieved parts data defined by the motion data included in the first animation data. The display means displays the generated second animation in response to the user's request As such, the user only needs to designate the keyword, and animation data including the part corresponding to the keyword is retrieved and the second animation data is generated based thereon. As a result, it is possible to provide a mobile terminal capable of readily generating an animation requested by a user even in the case of a mobile phone or the like that is restricted in user interface.

Preferably, the mobile terminal further includes parts data modification means for modifying the parts data included in the second animation data.

With this configuration, when the once-generated second animation displayed on the display means includes any parts that the user does not like, the user can modify the parts data. Accordingly, the second animation using the selected animation data as they are and having only the parts data modified can be generated.

Still preferably, the mobile terminal further includes motion data modification means for modifying the motion data included in the second animation data.

With this configuration, the user can modify the motion data of the once-generated second animation displayed on the display means as desired. Accordingly, the second animation using the parts data as they are and having only the motion data modified can be generated.

Still preferably, the mobile terminal further includes pick-up means for picking up an image. In this case, the parts data includes data representing the image picked up by the pick-up means.

With this configuration, the image picked up by a compact camera mounted to a mobile phone or the like can be used as a part moving in the animation.

Still preferably, the mobile terminal further includes generation means for generating the parts data.

With this configuration, the user can generate a part that he/she wants to use in the animation.

Still preferably, the mobile terminal further includes generation means for generating the motion data.

With this configuration, the user can generate motion of the part that he/she wants to use in the animation.

Still preferably, the mobile terminal further includes: sound storage means for storing a sound, and sound output means for outputting the sound. In this case, the control means includes means for controlling the display means and the sound output means to output the sound stored in the sound storage means while displaying the second animation based on the generated second animation data.

With this configuration, the user can output the sound together with the second animation.

Still preferably, the mobile terminal further includes sound input means for a user to input a sound to be output with the display of the second animation. In this case, the sound storage means includes means for storing the sound input by the sound input means.

With this configuration, the user can input the sound to be output together with the second animation.

Still preferably, the mobile terminal further includes: communication means for communicating with another communication apparatus; and communication control means connected to the communication means for controlling the communication means to send the second animation data to the another communication apparatus.

With this configuration, the user can send the second animation data generated by the user to another communication apparatus to show the same to a user of the communication apparatus.

Still preferably, the mobile terminal is a mobile phone.

With this configuration, it is readily possible to generate an animation requested by a user using a mobile phone.

An animation generating method according to yet another aspect of the present invention includes the steps of preparing a plurality of pieces of animation data each including parts data representing a part corresponding to a component constituting an animation and motion data representing motion of the part; preparing information for modification of the parts data; displaying the animation based on the animation data; causing a user to input information for selecting a first animation requested by the user from among the displayed animations; modifying the parts data representing the part corresponding to the component of the input first animation based on the prepared information; generating second animation data based on the modified parts data and the motion data included in the animation data corresponding to the first animation; and displaying a second animation based on the generated second animation data.

With this configuration, the user selects a favorite animation as a first animation from among a plurality of animations displayed. The parts data included in the first animation is modified in accordance with a user's request, for example. The second animation data is generated in which the motions of the modified parts data are defined by the motion data included in the animation data corresponding to the first animation. The generated second animation is displayed in accordance with a user's request. As such, the user can select the first animation from among the animations displayed in advance, and generate the second animation having the parts data included in the first animation modified. As a result, it is possible to provide an animation generating method with which an animation requested by a user can readily be generated even in the case of a mobile phone or the like that is limited in user interface.

A recording medium according to yet another aspect of the present invention is a computer readable recording medium having recorded thereon a program for assisting a user to generate an animation using a computer. The program causes the computer to perform the steps of preparing a plurality of pieces of animation data each including parts data representing a part corresponding to a component constituting an animation and motion data representing motion of the part; preparing information for modification of the parts data; displaying the animation based on the animation data; causing a user to input information for selecting a first animation requested by the user from among the displayed animations; modifying the parts data representing the part corresponding to the component of the input first animation based on the prepared information; generating second animation data based on the modified parts data and the motion data included in the animation data corresponding to the first animation; and displaying a second animation based on the generated second animation data.

With this configuration, it is possible to provide a recording medium having recorded thereon a program causing a computer to perform an animation generating method with which an animation requested by a user can readily be generated, even in the case of a mobile phone or the like that is limited in user interface.

A program according to yet another aspect of the present invention is a program for assisting a user to generate an animation using a computer. The program causes the computer to perform the steps of preparing a plurality of pieces of animation data each including parts data representing a part corresponding to a component constituting an animation and motion data representing motion of the part; preparing information for modification of the parts data, displaying the animation based on the animation data, causing a user to input information for selecting a first animation requested by the user from among the displayed animations; modifying the parts data representing the part corresponding to the component of the input first animation based on the prepared information, generating second animation data based on the modified parts data and the motion data included in the animation data corresponding to the first animation; and displaying a second animation based on the generated second animation data.

With this configuration, it is possible to provide a program causing a computer to perform an animation generating method with which an animation requested by a user can readily be generated even in the case of a mobile phone or the like that is limited in user interface.

A system according to yet another aspect of the present invention is an animation generating system including a mobile terminal and an animation data generating apparatus. The mobile terminal includes animation data storage means for storing a plurality of pieces of animation data each including parts data representing a part corresponding to a component constituting an animation and motion data representing motion of the part; storage means for storing information for modification of the parts data, display means for displaying the animation based on the animation data; input means for a user to input information for selecting a first animation requested by the user from among the animations displayed on the display means; modification means for modifying the parts data representing the part corresponding to the component of the input first animation based on the information stored in the storage means; and send means for sending the first animation data and the modified parts data to the animation generating apparatus. The animation generating apparatus includes receive means for receiving the first animation data and the modified parts data from the mobile terminal, generation means for generating second animation data based on the modified parts data and the motion data included in the animation data corresponding to the first animation received from the mobile terminal; and send means for sending the generated second animation to the mobile terminal for display on the display means of the mobile terminal.

With this configuration, even in the case of a mobile terminal such as a mobile phone limited in user interface and processing capability, it can communicate with an animation generating apparatus via a network to readily generate an animation requested by a user. More specifically, the animation is generated by the animation generating apparatus, rather than the mobile terminal. As such, it is possible to provide an animation generating system capable of readily generating an animation requested by a user.

### Brief Description of the Drawings

Fig. 1 shows an appearance of a mobile phone according to a first embodiment of the present invention.
Fig. 2 is a control block diagram of the mobile phone shown in Fig 1.
Fig. 3 shows an animation template database stored in a storage unit.
Fig. 4 shows a modification method database stored in the storage unit.
Fig. 5 is a flowchart illustrating processing procedure in the mobile phone of the first embodiment of the present invention.
Figs. 6A-6I show display examples in the mobile phone of the first embodiment of the present invention.
Fig. 7 shows animation data stored in the storage unit.
Figs. 8A-8E show display examples in the mobile phone of the first embodiment of the present invention.
Fig. 9 is a flowchart illustrating processing procedure in a mobile phone according to a second embodiment of the present invention.
Figs. 10A-10I show display examples in the mobile phone of the second embodiment of the present invention.
Figs. 11 and 12 show component data stored in the storage unit.
Fig. 13 is a flowchart illustrating processing procedure in a mobile phone according to a modification of the second embodiment of the present invention.
Figs. 14A-14G show display examples in the mobile phone according to the modification of the second embodiment of the present invention.
Fig. 15 is a flowchart illustrating processing procedure in a mobile phone according to a third embodiment of the present invention.
Figs. 16A-16F show display examples in the mobile phone of the third embodiment of the present invention.
Fig. 17 is a flowchart illustrating processing procedure in a mobile phone according to a modification of the third embodiment of the present invention.
Figs. 18A-18E show display examples in the mobile phone according to the modification of the third embodiment of the present invention.
Figs. 19A-19G, 20A and 20B show display example in other operation of the present invention.

### Best Modes for Carrying Out the Invention

Hereinafter, embodiments of the present invention will be described with reference to the drawings. Throughout the description, the same reference characters denote the same portions, which are same in name and function as well. Thus, detailed description thereof will not be repeated where appropriate.

### <First Embodiment>

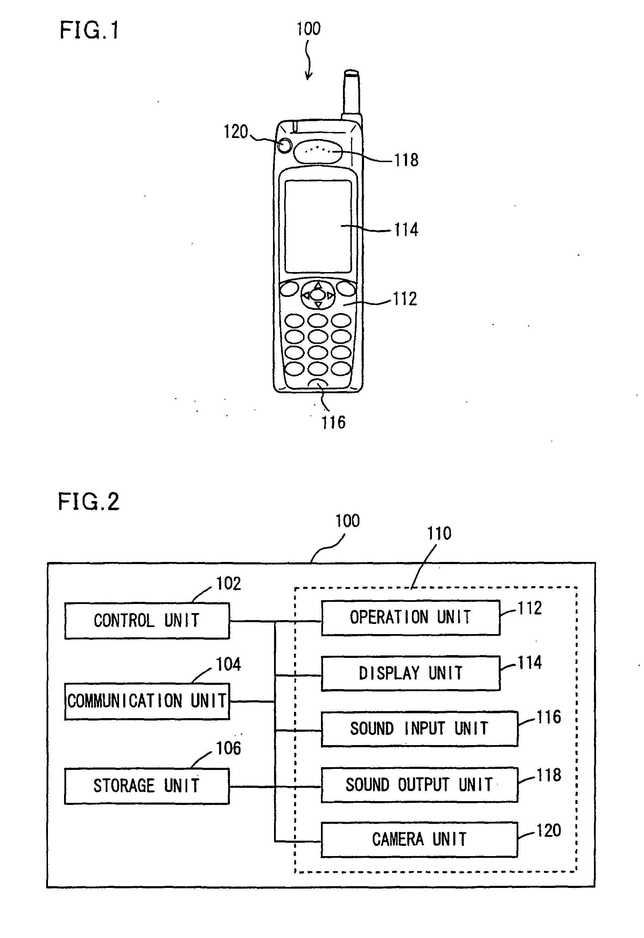

Referring to Fig. 1, the mobile phone 100 according to the present embodiment includes: an operation unit 112 formed often keys and others to allow a user to enter a telephone number of another telephone set to place a call, selection of an animation and others; a display unit 114 formed of an LCD (Liquid Crystal Display) to display a telephone number of another telephone set, an animation and others; a sound input unit 116 formed of a microphone for a user to input sound, a sound output unit 118 formed of a speaker to output sound to the user; and a camera unit 120 formed of a CCD camera to pick up an image

Referring to Fig. 2, the control block of mobile phone 100 shown in Fig. 1 is described As shown in Fig. 2, mobile phone 100 includes. a control unit 102 that controls the entire mobile phone 100; a communication unit 106 for communication with another telephone set, a storage unit 108 that stores a program executed by control unit 102, intermediate data of the program, animation data generated, and data received via communication unit 106; and an input/output unit 110 formed of operation unit 112, display unit 114, sound input unit 116; sound output unit 118 and camera unit 120.

In the mobile phone 100 of the present embodiment, the method for a user to generate an animation is implemented by hardware of mobile phone 100 and software executed by control unit 102 Normally, such software is stored in storage unit 106 and executed by control unit 102. The hardware in itself of mobile phone 100 shown in Figs. 1 and 2 is conventional Thus, the most essential feature of the present invention is the software recorded on storage unit 106. Since the operation of mobile phone 100 shown in Figs. 1 and 2 in itself is well known, detailed description thereof is not repeated here

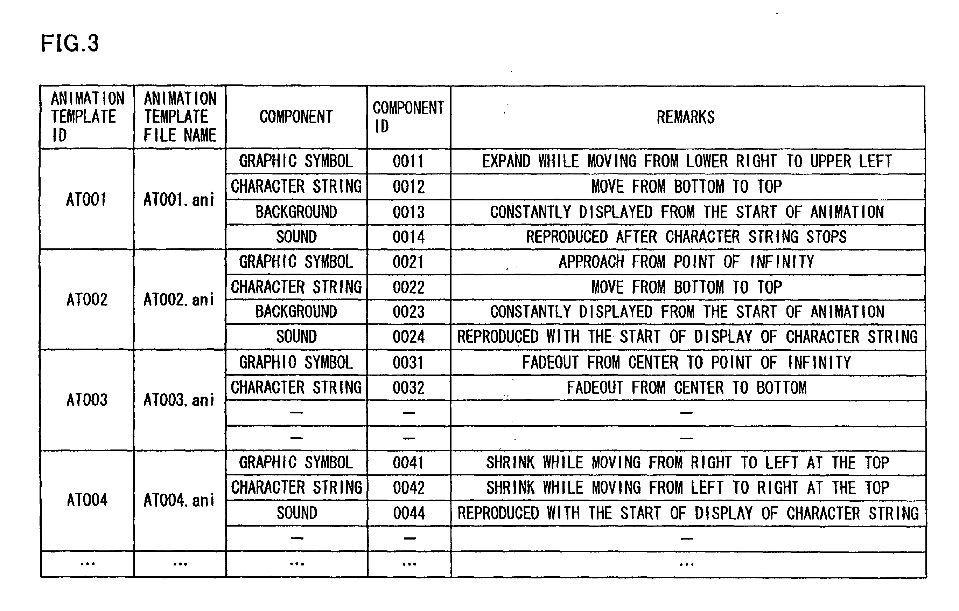

Referring to Fig. 3, an animation template database stored in storage unit 106 of mobile phone 100 according to the present embodiment is described. As shown in Fig. 3, the animation template database stored in storage unit 106 has a plurality of animation templates stored therein. The animation template refers to a model or pattern of an animation. Each animation template includes an animation template ID (Identification) for identification of the animation template, an animation template file name, components included in the animation template, and component IDs for specification of the respective components. Although movement of each component in the animation template is explained in the remarks column in Fig. 3 for the purpose of explanation of the embodiment, the actual animation template database does not store such remarks

For example, as shown in Fig. 3, the animation template specified by an animation template ID of "AT001" has an animation template file name of "AT001.ani", and it includes a graphic symbol component specified by a component ID of "0011", a character string component specified by "0012", a background component specified by "0013", and a sound component specified by "0014" In an animation implemented by this animation template, the graphic symbol component increases in size while it moves from lower left to upper left on the screen. The character string component moves from bottom to top on the screen. The background component is displayed constantly from the start of the animation. The sound component is reproduced and output after the character string component stops the above-described movement from bottom to top. It is noted that there are some animation templates that include, not all of, but only some of the graphic symbol, character string, background and sound components, as shown in Fig. 3. It is also noted that the components are not limited to those shown in Fig. 3, and other components may exist.

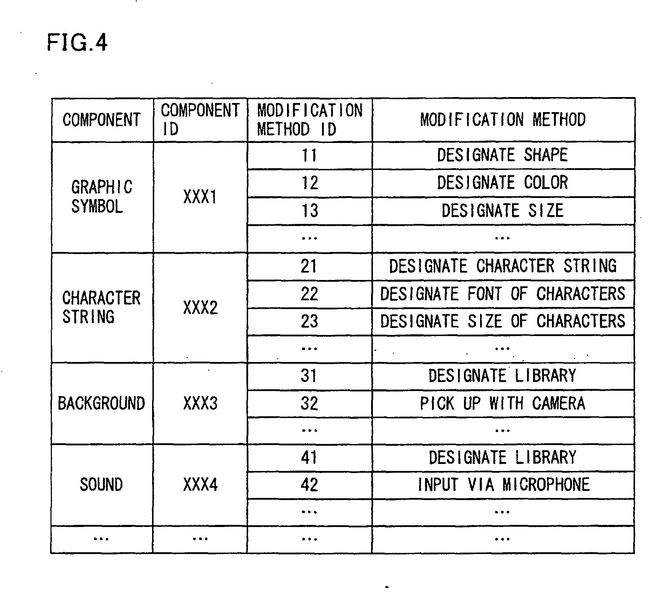

A modification method database stored in storage unit 106 is now described with reference to Fig 4. In the modification method database, at least one modification method is stored for each type of component, for use in modifying the component of the type

For the graphic symbol component, a modification method specified by a modification method ID of "11" designating a shape of the graphic symbol, a modification method specified by a modification method ID of "12" designating a color of the graphic symbol, and a modification method specified by a modification method ID of "13" designating a size of the graphic symbol are stored.

For the character string component, a modification method specified by a modification method ID of "21" designating characters of the character string, a modification method specified by a modification method ID of "22" designating a font of the characters of the character string, and a modification method specified by a modification method ID of "23" designating a size of the characters of the character string are stored.

For the background component, a modification method specified by a modification method ID of "31" designating an image representing the background from within a prestored library, and a modification method specified by a modification method ID of "32" designating an image representing the background by picking up the same with camera unit 120 are stored.

For the sound component, a modification method specified by a modification method ID of "41" designating a sound being output together with the animation from within a prestored library, and a modification method specified by a modification method ID of "42" designating a sound by inputting the same via sound input unit 116 are stored.

Figs. 3 and 4 show common components and component IDs. In the present embodiment, the number of types of components is less than 10, so that the figure of the unit's place of the four-digit component ID can specify the type of the component. The modification methods are not limited to those shown in Fig. 4, as is the case with the components not limited to those shown in Fig. 3.

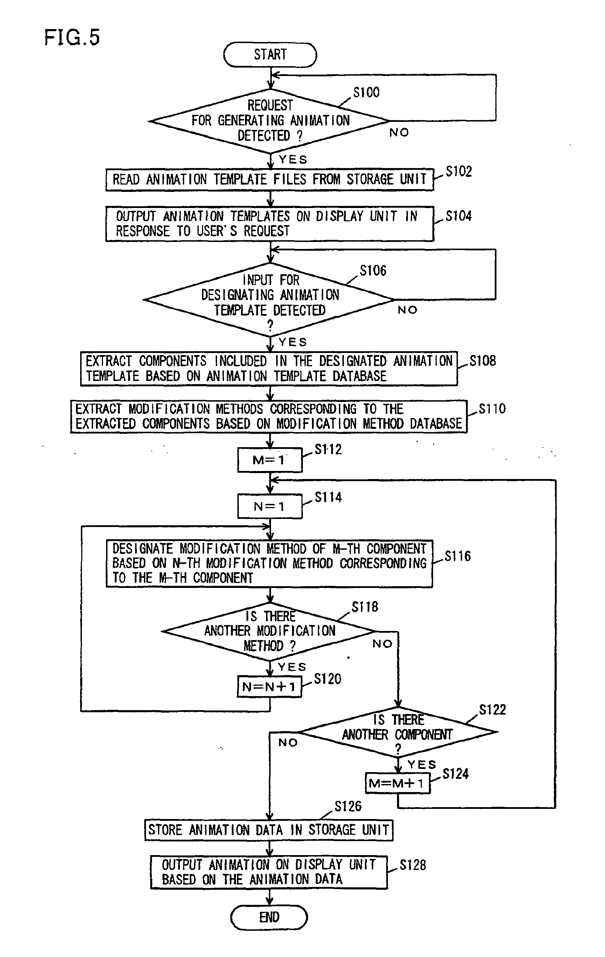

Referring to Fig. 5, a program executed in mobile phone 100 according to the present embodiment has a control structure as follows.

In step (hereinafter, abbreviated as "S") 100, control unit 102 of mobile phone 100 determines whether a request for generating an animation has been detected. The determination is made when a user of mobile phone 100 presses a predetermined key of operation unit 112. When the request for generating an animation is detected (YES in S100), the process goes to S102. If not (NO in S100), the process returns to S100 and waits until the user inputs the request for generating an animation via operation unit 112.

In S102, control unit 102 reads an animation template file from the animation template database (Fig. 3) stored in storage unit 106. In S104, control unit 102 outputs an animation template on display unit 114 in response to a request of the user. At this time, the user can see a plurality of animation templates displayed on display unit 114 in order of animation template IDs.

In S106, control unit 102 determines whether an input designating an animation template has been detected. The determination is made when the user presses a key of operation unit 112 designating an animation template. When the input designating an animation template is detected (YES in S106), the process goes to S108. If not (NO in S106), the process returns to S106 and waits for the user's input designating an animation template.

In S108, control unit 102 extracts components included in the designated animation template, based on the animation template database (Fig. 3). At this time, in the case of the animation template specified by animation template ID of "AT001" shown in Fig. 3, a graphic symbol component, a character string component, a background component, and a sound component are extracted.

In S110, control unit 102 extracts modification methods corresponding to the extracted components, based on the modification method database (Fig. 4). At this time, for the graphic symbol component having component ID of "0011", modification methods having modification method IDs of "11", "12" and "13" are extracted. For the other components, the modification methods stored in the modification method database shown in Fig. 4 are extracted.

In S112, control unit 102 initializes a variable M (M=1). In S114, control unit 102 initializes a variable N (N=1). In S116, control unit 102 designates a modification method of the M-th component, based on the N-th modification method corresponding to the M-th component In S118, control unit 102 determines whether there is another modification method for the same component. The determination is made based on the type of the extracted modification method. When there is another modification method (YES in S 118), the process goes to S120. If not (NO in S118), the process goes to S122.

In S120, control unit 102 increments variable N by 1. Thereafter, the process returns to S116, where a modification method of the M-th component is designated based on the (N+1)-th modification method corresponding to the M-th component. The designation of the modification method is repeated until all the modification methods corresponding to the M-th component are designated.

In S122, control unit 102 determines whether there is another component The determination is made based on the type of the extracted component. If there is another component (YES in S122), the process goes to S124. If not (NO in S122), the process goes to S126.

In S124, control unit 102 increments variable M by 1. Thereafter, the process returns to S114, and a modification method of the (M+1)-th component is designated based on the first modification method corresponding to the (M+1)-th component. As such, modification methods of components are designated for all the components included in the animation template, corresponding to all the modification methods stored for the respective components

In S126, control unit 102 stores animation data in storage unit 106. At this time, data representing the modified components are stored together with the animation template file name. In S128, control unit 102 outputs an animation on display unit 114 based on the animation data. Thereafter, control unit 102 sends the animation data to another telephone set in response to a request of the user. In the telephone set having received the animation data, the animation is output to a display unit thereof.

An operation of mobile phone 100 based on the above-described structure and flowchart is now described.

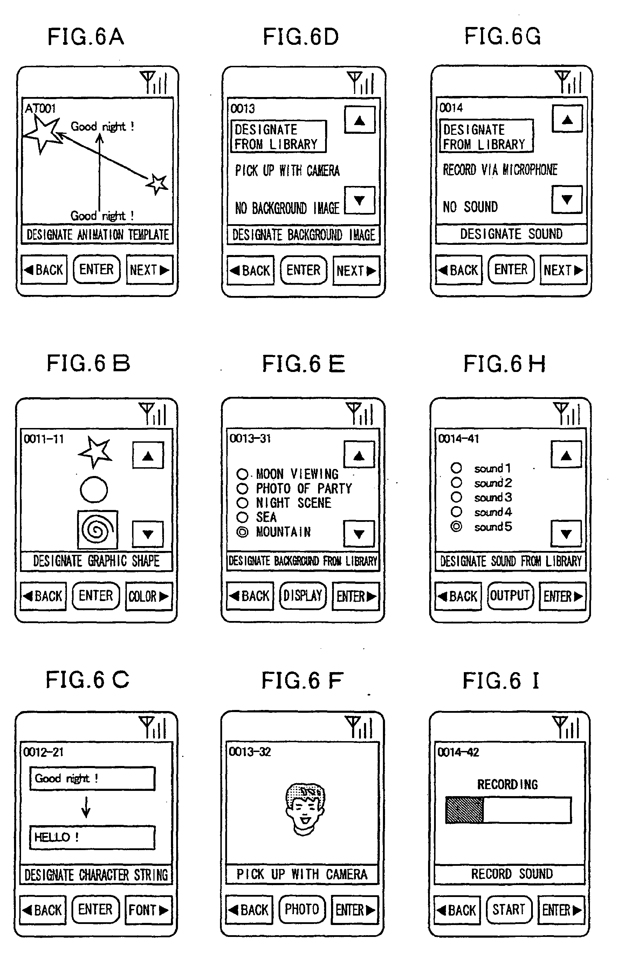

When a user of mobile phone 100 inputs a request for generating an animation, the request is detected (YES in S100), and an animation template file is read from the animation template database (Fig. 3) stored in storage unit 106 (S102). In response to a request of the user, an animation template is output to display unit 114, as shown in Fig. 6A. At this time, the animation is displayed on display unit 114, with the graphic symbol and/or the character string included in the animation template moving as shown in Fig. 6A The animation template database stores a plurality of animation template files, as shown in Fig. 3. Pressing the left and right keys of operation unit 112 can make the animation templates displayed in order of the animation template IDs.

When the user presses the ENTER key shown in Fig 6A, it is detected that the animation template displayed on display unit 114 at that moment has been designated (YES in S106). Components included in the designated animation template are extracted based on the animation template database (Fig. 3) (S108). Modification methods corresponding to the extracted components are extracted based on the modification method database (Fig. 4) (S110).

The graphic symbol component included in the designated animation template is modified. Specifically, the shape of the graphic symbol is designated, as shown in Fig. 6B, or the color or the size of the graphic symbol is designated. Further, the character string component included in the animation template is modified. Specifically, a character string is input, as shown in Fig. 6C, or the font or the size of the characters is designated. Further, the modification method of the background component included in the animation template is determined, as shown in Fig. 6D. At this time, when the background component is designated from within the library, a list of the backgrounds stored in the library is displayed, as shown in Fig. 6E. When it is picked up by a camera, an image picked up by camera unit 120 is displayed, as shown in Fig 6F. Further, the modification method of the sound component included in the animation template is determined, as shown in Fig 6G. At this time, when the sound is designated from among the data stored in the library, a list of the sounds stored in the library is displayed, as shown in Fig. 6H. In the case where sound input unit 116 is used to input a sound, the START key is pressed and the display shows that it is in process of recording, as shown in Fig. 6I.

As such, all the modification methods for the respective components included in the animation template designated by the user are designated (S112-S124).

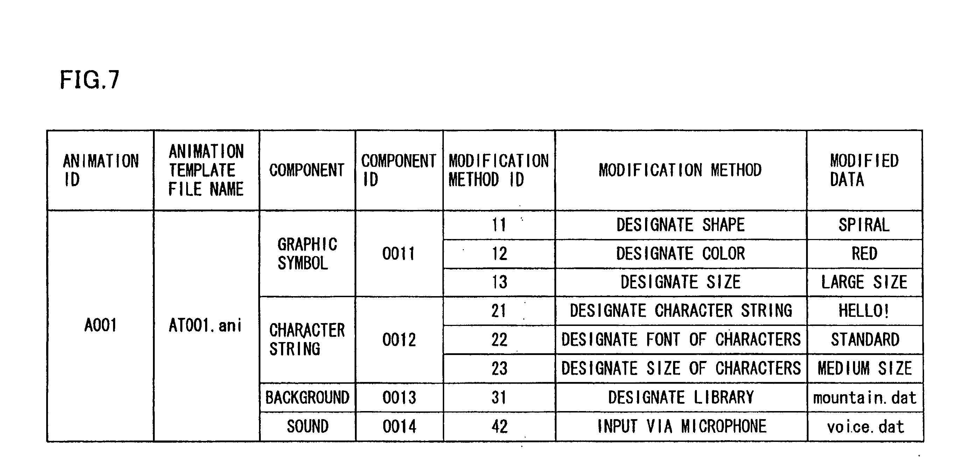

The animation template thus designated by the user and data of the modified components included in the animation template are stored in storage unit 106 as animation data (S126). At this time, the animation data as shown in Fig. 7 are stored in storage unit 106. An animation is output to display unit 114 based on the animation data stored in storage unit 106 (S128).

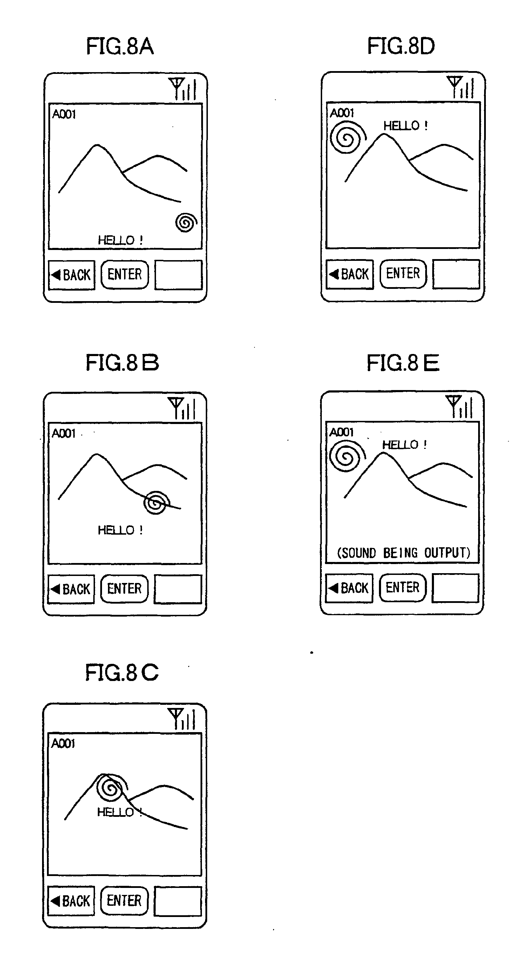

A display provided on display unit 114 based on the animation data shown in Fig. 7 is now described by way of example. Figs 8A-8E show a display example of the animation corresponding to Fig 7. As shown in Figs. 8A-8E, in this animation, an image specified by the file name of "mountain.dat" is displayed as the background component. A red spiral as the graphic symbol component gradually increases in size while it moves from lower right to upper left on the screen. The character string component of "HELLO!" also moves from bottom to top on the screen.

Although it has been described that a user selects one of a plurality of prestored animation templates as shown in Fig. 6A, it is not restricted thereto. For example, the user may create an animation template using mobile phone 100.

Further, although it has been described that a user selects a graphic shape and its color from among a plurality of prestored graphic shapes and colors as shown in Fig. 6B, it is not restricted thereto. For example, the user may create a graphic shape and/or its color using mobile phone 100.

Further, for the component not to be modified among the extracted components, modification of the relevant component may be skipped to proceed to modification of the next component.

As described above, according to the mobile phone of the present embodiment, when a user designates a desired one of the animation templates displayed on the display unit, components included in the designated animation template are extracted. Modification methods corresponding to the respective extracted components are extracted, and the components are modified in accordance with the corresponding modification methods. An animation having the modified components moving in accordance with the motions included in the designated animation template is generated. As such, the user can select a desired one of a plurality of animation templates displayed on the display unit in advance, and can generate animation data by modifying the components included in the animation template. Accordingly, even in the case of a mobile phone where there is a restriction on a user interface, it is readily possible to generate an animation as requested by a user.

### <Second Embodiment>

In the mobile phone 100 according to the second embodiment of the present invention, processing different in content from that of the first embodiment described above (Fig. 5) is performed. The hardware configuration and functions of mobile phone 100 of the second embodiment are the same as those of the first embodiment, and thus, detailed description thereof will not be repeated here.

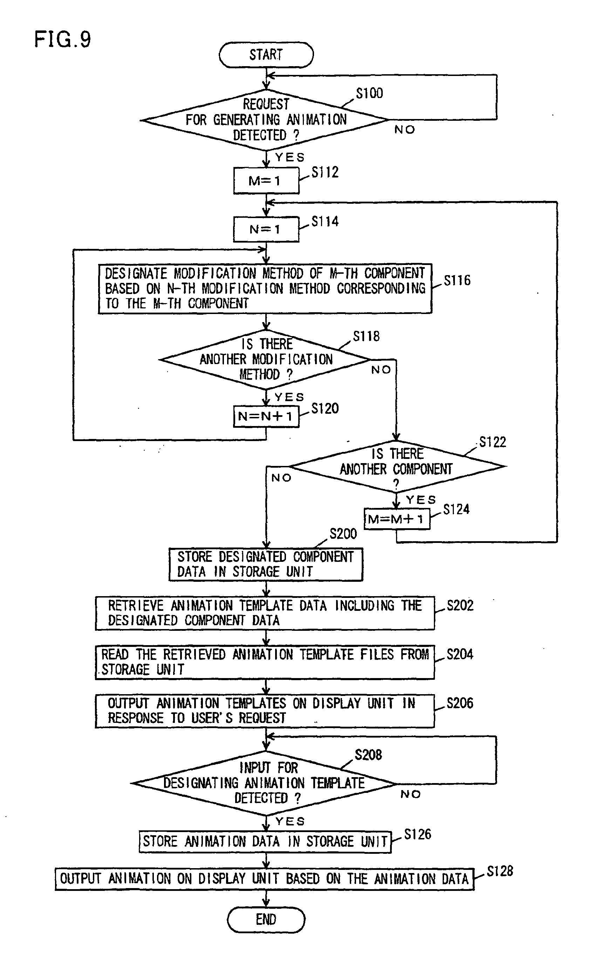

Referring to Fig. 9, a program executed in mobile phone 100 of the present embodiment has a control structure as follows. In the flowchart shown in Fig. 9, the same step numbers as those in Fig. 5 denote the same process steps, and thus, detailed description thereof is not repeated here.

When control unit 102 detects a request for generating an animation (YES in S100), it detects one or more components that the user wants to include in the animation, based on inputs from the user. At this time, the type of the component and the type of the modification method are determined by the figure of the unit's place of the component ID stored in the above-described modification method database (Fig. 4). As such, the components designated by the user and the modification methods therefor are designated

In S200, control unit 102 stores the designated.component data in storage unit 106. The component data include the components and the modification methods therefor. In S202, control unit 102 retrieves one or more animation templates including the designated component data. At this time, the animation templates including the components included in the designated component data are retrieved, based on the animation template database (Fig. 3). For example, in the case of the component data including graphic symbol and character string components, the animation template (including the graphic symbol and character string components) specified by the animation template ID of "AT003" as shown in Fig. 3 is retrieved. In the case of the component data including graphic symbol, character string and sound components, the animation template (including the graphic symbol, character string and sound components) specified by the animation template ID of "AT004" as shown in Fig. 3 is retrieved. In other words, any animation template having the components of the same types as those included in the component data is retrieved.

In S204, control unit 102 reads animation template files corresponding to the retrieved animation templates from the animation template database (Fig. 3) stored in storage unit 106. In S206, control unit 102 outputs the animation templates on display unit 114 in response to a request of the user.

In S208, control unit 102 determines whether an input designating an animation template has been detected. If so (YES in S208), the process goes to S126. If not (NO in S208), the process returns to S208, and waits for an input designating an animation template.

In S126, control unit 102 stores the animation data in storage unit 106 In S128, control unit 102 outputs an animation on display unit 114 based on the animation data.

An operation of mobile phone 100 according to the above-described structure and flowchart is now explained.

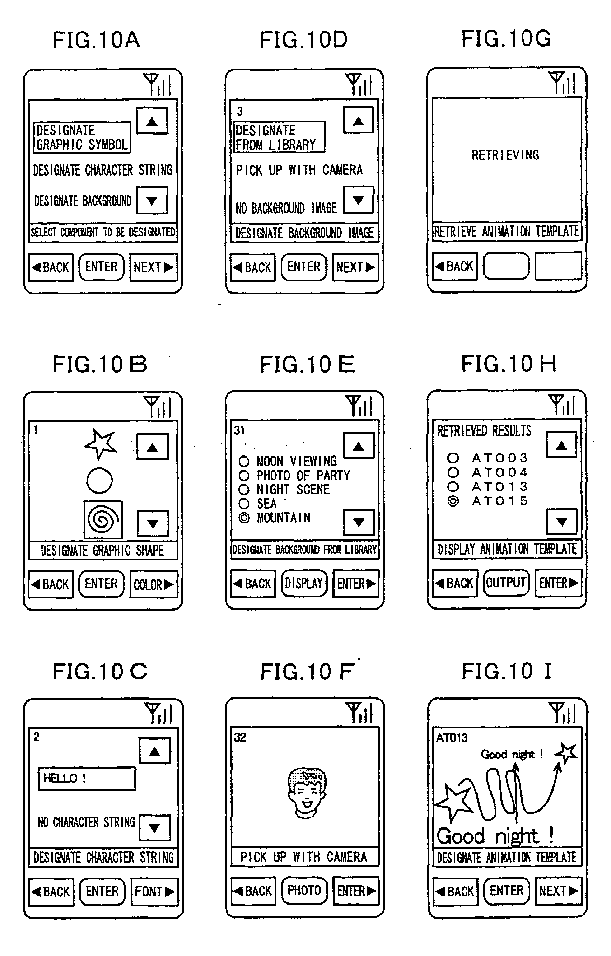

When a request of a user of mobile phone 100 to generate an animation is detected, modification methods of the components are displayed, as shown in Fig. 10A. At this time, the user can use the up/down keys and left/right keys in operation unit 112 to determine which graphic symbol component is to be designated and how the designated graphic symbol component is to be modified.

When the shape of the graphic symbol component is to be designated, as shown in Fig. 10B, the user can select one of the prestored shapes as desired, or the user can create the shape of the graphic symbol. The color or the size of the designated shape of the graphic symbol may further be designated.

The screen for designating modification of the character string component as shown in Fig. 10C, and the screen for designating modification of the background component as shown in Fig. 10D, are displayed sequentially. Further, the screen is switched between the case where the background is designated from the library and the case where it is picked up by the camera, as shown in Figs. 10E and 10F.

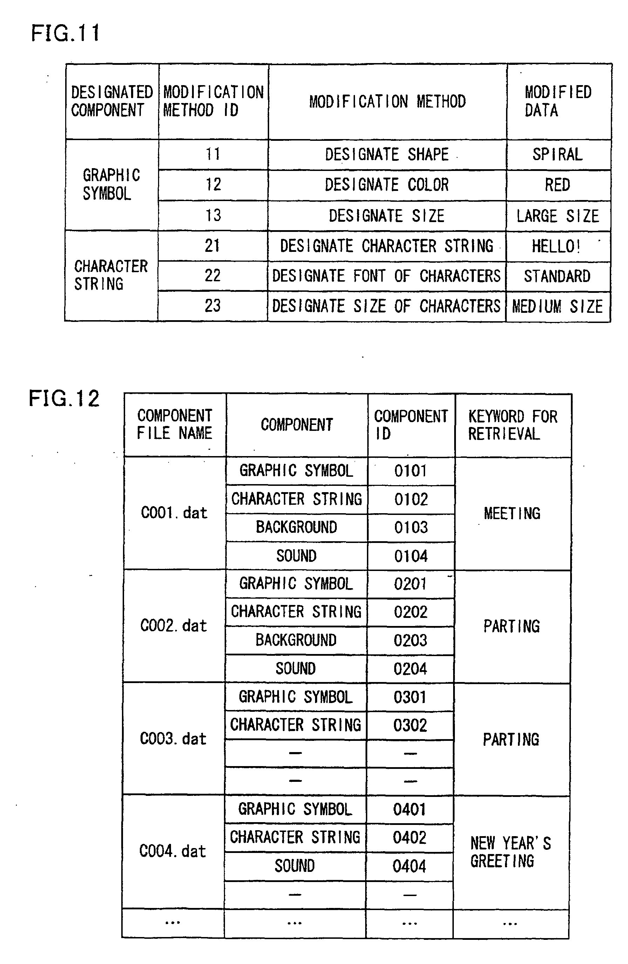

When the user designates the components and the modification methods therefor (S112-S124), the designated component data are stored in storage unit 106 (S200). Fig. 11 shows the component data stored in storage unit 106 at this time. Any animation template including the components included in the component data shown in Fig. 11 is retrieved based on the animation template database (Fig. 3) (S202). In the case of the component data shown in Fig. 11, the graphic symbol component and the character string component have been designated. Thus, the animation templates including the graphic symbol and character string components are output as the retrieved results. At this time, the screen shown in Fig. 10G is displayed on display unit 114. The animation template files corresponding to the animation templates as the retrieved results are read from storage unit 106 (S204), and in response to the user's request, the animation templates are output on display unit 114 (S206). At this time, a list of the retrieved results is displayed, and when the user selects one of the retrieved results from the list, the selected animation template is displayed on display unit 114, as shown in Figs 10H and 10I.

When the user presses the ENTER key as the screen of Fig. 10I is being displayed, the input designating the animation template is detected (YES in S208), and the animation data is stored in storage unit 106 (S126). The animation data stored at this time corresponds to the above-described animation data shown in Fig. 7.

As such, according to the mobile phone of the present embodiment, when the user designates one or more components that he/she wants to use in an animation, an animation template including the components is retrieved, and animation data including the components input by the user having their motions defined by the retrieved animation template is generated. As such, when the user inputs components that he/she wants to use in advance, the animation template corresponding to the components is retrieved, which facilitates generation of the animation data.

### <Modification of Second Embodiment>

Hereinafter, a modification of the second embodiment is described. In this modification, as shown in Fig. 12, storage unit 106 stores a component database having a plurality of component files stored therein. As shown in Fig. 12, the component database includes a plurality of component files, and each component file stores components included in the component file, their component IDs, and a keyword for retrieval. For example, the component file having a component file name of "C001.dat" includes four components, i.e., a graphic symbol component having a component ID of "0101", a character string component having a component ID of "0102", a background component having a component ID of"0103", and a sound component having a component ID of "0104". It further stores a keyword of "meeting" as the keyword for retrieval. It is noted that there is a component file, such as "C003.dat", that includes only graphic symbol and character string components and does not include background and sound components, as shown in Fig. 12.

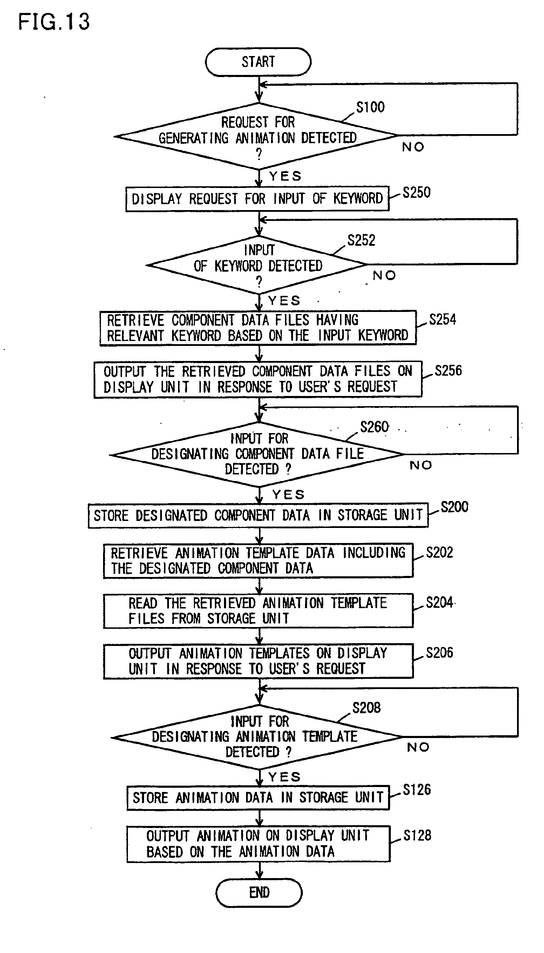

Referring to Fig. 13, a control structure of a program executed in mobile phone 100 of the present modification is described. In the flowchart shown in Fig. 13, the same step numbers as those in Fig. 9 denote the same process steps, and thus, detailed description thereof is not repeated here.

In S250, control unit 102 displays a screen requesting an input of a keyword on display unit 114. In S252, control unit 102 determines whether the input of the keyword has been detected. If so (YES in S252), the process goes to S254. If not (NO in S252), the process returns to S252, and waits until an input of the keyword is detected.

In S254, control unit 102 retrieves, based on the input keyword, any component data file having the relevant keyword. At this time, the keyword for retrieval shown in Fig. 12 is used.

In S256, control unit 102 outputs the retrieved component data file(s) on display unit 114 in response to the user's request.

In S260, control unit 102 determines whether an input designating a component data file has been detected. If so (YES in S260), the process goes to S200. If not (NO in S260), the process returns to S260, and waits for detection of an input designating a component data file.

Thereafter, the process proceeds to S200-S208 and S126-S128, through which control unit 102 retrieves any animation template including the component data included in the component data file retrieved by the keyword, and outputs the retrieved animation templates on display unit 114 for the user to select an animation template.

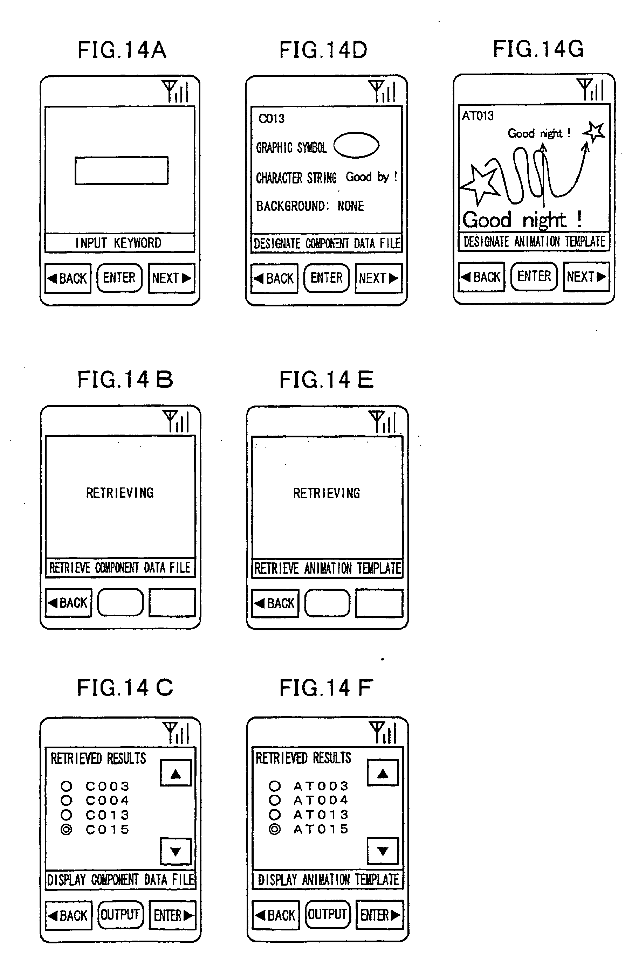

An operation of mobile phone 100 based on the structure and the flowchart as described above is now explained. When a request of the user of mobile phone 100 to generate an animation is detected (YES in S100), a screen requesting an input of the keyword is displayed on display unit 114 (S250). At this time, the screen shown in Fig. 14A is displayed. When the user enters the keyword, the input of the keyword is detected (YES in S252), and any component data file having the relevant keyword is retrieved based on the input keyword (S254). At this time, the screen shown in Fig. 14B is displayed on display unit 114.

A list of the retrieved results is displayed on display unit 114, as shown in Fig. 14C. The retrieved component data files are output on display unit 114 in response to the user's request (S256). At this time, the graphic symbol component, the character string component and others included in the component data file designated by the user from among the list of the retrieved results are displayed on display unit 114, as shown in Fig. 14D. When the user enters an input to designate one component data file from the retrieved results, the input designating the component data file is detected (YES in S260), and the designated component data are stored in storage unit 106 (S200). Any animation template including the designated component data is retrieved (S202). At this time, the screen shown in Fig. 14E is displayed on display unit 114. The retrieved results of the animation templates are displayed as shown in Fig 14F, and the animation templates are output on display unit 114 in response to the user's request (S206). At this time, the screen as shown in Fig. 14G is displayed on display unit 114 When the user designates one of the retrieved animation templates while he/she watches the screen as shown in Fig. 14G, the input designating the animation template is detected (YES in S208), and the animation data are stored in storage unit 106 (S126). The animation data stored in storage unit 106 at this time corresponds to the animation data shown in Fig. 7.

As such, according to the present modification, the user merely designates a keyword so that the component files having the keyword for retrieval related to the input keyword are retrieved from the component database, and the components included in the component data are displayed on the display unit. The user examines the components displayed on the display unit, and designates one component file from among the component files retrieved by the keyword. The animation template corresponding to the designated component file is retrieved, and animation data requested by the user is generated.

### <Third Embodiment>

Hereinafter, the third embodiment of the present invention is described. The third embodiment applies to the case where the animation data stored in storage unit 106, as shown in Fig. 7, is modified through the procedures.explained in the first and second embodiments above. Otherwise, the hardware configuration and the function are the same as those of the first embodiment, and thus, detailed description thereof will not be repeated here.

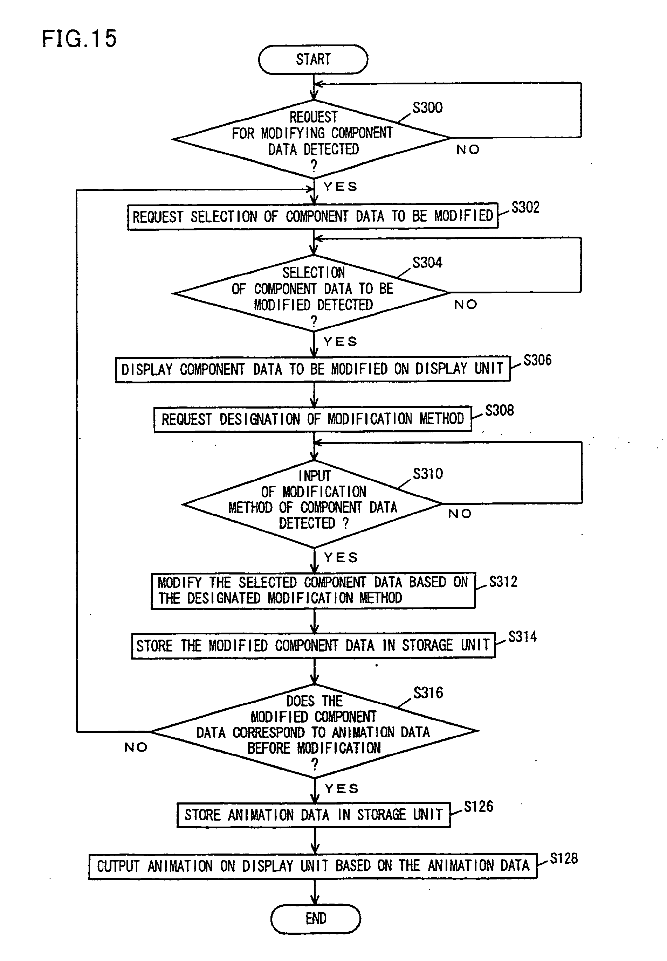

Referring to Fig. 15, a program executed in mobile phone 100 of the present embodiment has a control structure as follows. In this flowchart, the same step numbers as those in Fig. 5 denote the same processing steps, and thus, detailed description thereof is not repeated here.

In S300, control unit 102 determines whether a request for modifying component data has been detected If so (YES in S300), the process goes to S302. If not (NO in S300), the process returns to S300, and waits for detection of the request to modify the component data.

In S302, control unit 102 requests selection of the component data to be modified. At this time, control unit 102 displays a screen requesting selection of the component data to be modified on display unit 114. In S304, control unit 102 determines whether selection of the component data to be modified has been detected. If so (YES in S304), the process goes to S306. If not (NO in S304), the process returns to S304 and waits for detection of the selection of the component data to be modified.

In S310, control unit 102 determines whether an input of a modification method of the component data has been detected. If so (YES in S310), the process goes to S312. If not (NO in S310), the process returns to S310 and waits for detection of the input of a modification method of the component data.

In S312, control unit 102 modifies the selected component data based on the designated modification method. In S314, control unit 102 stores the modified component data in storage unit 114.

In S316, control unit 102 determines whether the modified component data corresponds to the animation data before modification. At this time, if an input to modify a character string component is entered while the animation data before modification does not include a character string, then it is determined that the modified component data and the animation data before modification do not correspond to each other. When the modified component data corresponds to the animation data before modification (YES in S316), the process goes to S126. If not (NO in S316), the process returns to S302.

In S126, control unit 102 stores animation data in storage unit 106. In S128, control unit 102 outputs an animation on display unit 114 based on the animation data

An operation of mobile phone 100 based on the structure and the flowchart as described above is now explained

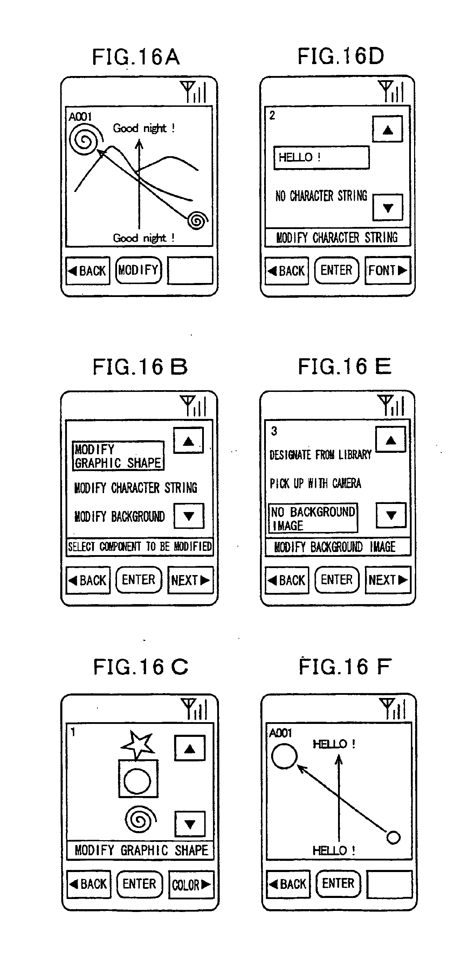

When the user presses the MODIFY key while the animation data is being displayed on display unit 114 as shown in Fig. 16A, the request for modification of the component data is detected (S300). A screen for selection of the component data to be modified is displayed (S302), as shown in Fig. 16B. The graphic symbol component, the character string component and the background component are modified (S312), as shown in Figs. 16C-16E, and the modified component data are stored in storage unit 106 (S314). When the modified component data corresponds to the animation data before modification (YES in S316), an animation is output on display unit 114 based on the modified animation data, as shown in Fig. 16F.

As such, according to the mobile phone of the present embodiment, component data representing the components included in the once generated animation data are modified. Thus, it is possible to generate new animation data utilizing the animation template selected in the first or second embodiment.

### <Modification of Third Embodiment>

Hereinafter, a modification of the third embodiment is described. In this modification, the animation template is modified, instead of the component data representing the components in the third embodiment.

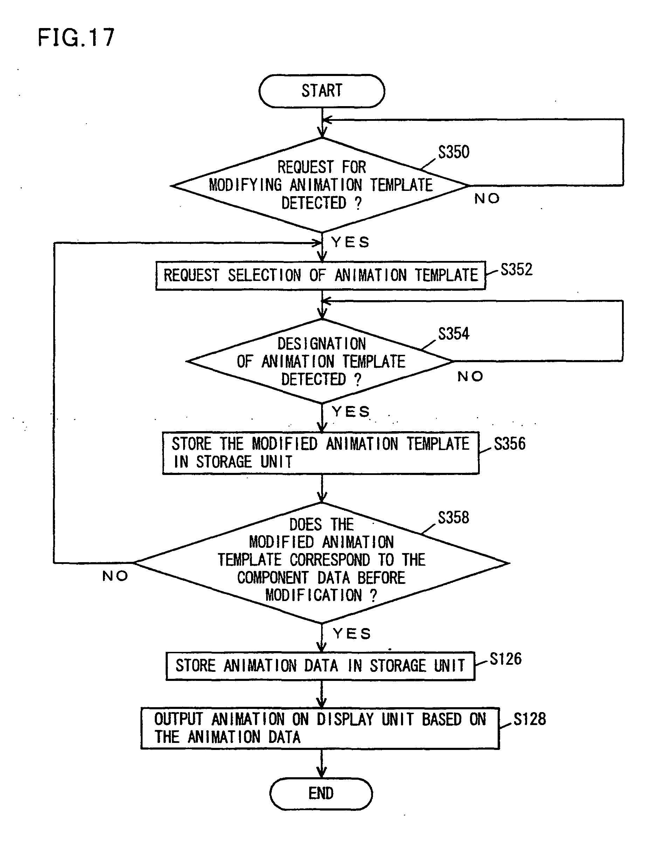

Referring to Fig. 17, a control structure of the processing in the mobile phone according to the present modification is described. In this flowchart, the same step numbers as those in Fig. 5 denote the same processing steps, and thus, detailed description thereof is not repeated.

In S350, control unit 102 determines whether a request for modification of an animation template has been detected. If so (YES in S350), the process goes to S352. If not (NO in S350), the process returns to S350, and waits for detection of the request for modification of an animation template.

In S352, control unit 102 requests selection of an animation template. At this time, control unit 102 displays a screen requesting selection of an animation template on display unit 114.

In S354, control unit 102 determines whether designation of an animation template has been detected. If so (YES in S354), the process goes to S356. If not (NO in S354), the process returns to S354, where detection of designation of an animation template is awaited.

In S356, control unit 102 stores the modified animation template in storage unit 106.

In S358, control unit 102 determines whether the modified animation template corresponds to the component data before modification. At this time, if the animation template is modified to an animation template including a character string even though the component data representing the components before modification do not include a character string component, then it is determined that the modified animation template does not correspond to the component data before modification. When the modified animation template corresponds to the component data before modification (YES in S358), the process goes to S126. If not (NO in S358), the process returns to S352.

In S126, control unit 102 stores animation data in storage unit 106. In S128, control unit 102 outputs an animation on display unit 114 based on the animation data.

An operation of mobile phone 100 of the present modification based on the structure and the flowchart as described above is now explained.

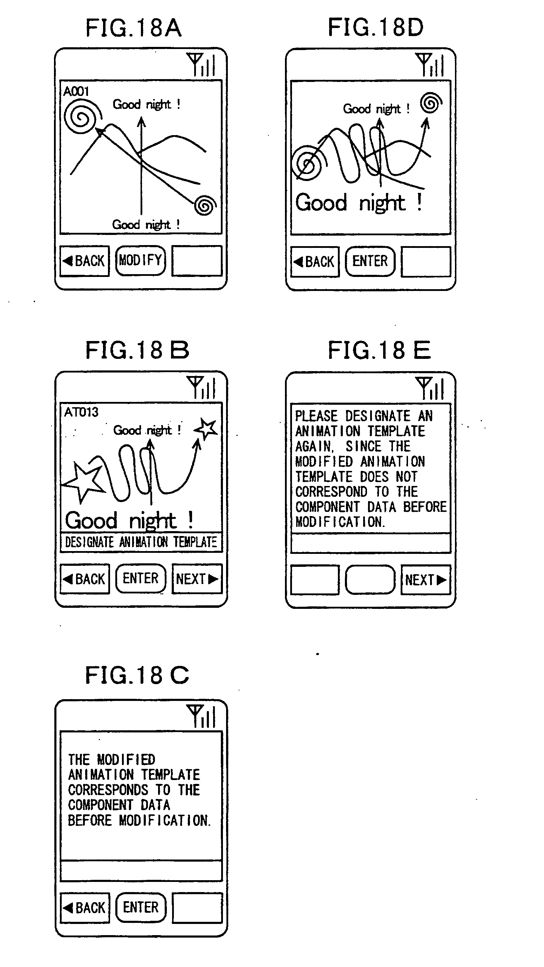

When the user presses the MODIFY key while the animation as shown in Fig. 18A is being displayed on display unit 114, the request for modification of an animation template is detected (YES in S350), and a screen requesting selection of an animation template is displayed (S352). At this time, the animation templates stored in the animation template database (Fig. 3) are displayed on display unit 114, as shown in Fig. 18B. The user manipulates the left/right keys in operation unit 112 to sequentially watch the animation templates stored in the animation template database (Fig. 3). When the user presses the ENTER key shown in Fig. 18B while the animation template as desired is being displayed, designation of the animation template is detected (YES in S354), and the modified animation template is stored in storage unit 106 (S356). When the modified animation template corresponds to the component data before modification (YES in S358), the screen as shown in Fig. 18C is displayed on display unit 114. The animation data is stored in storage unit 106 (S126), and an animation is output on display unit 114 based on the animation data generated based on the modified animation template (S128). At this time, the screen as shown in Fig. 18D is displayed on display unit 114.

If the modified animation template does not correspond to the component data before modification (NO in S358), the screen as shown in Fig. 18E is displayed on display unit 114. When the user presses a key in operation unit 112 corresponding to "NEXT" shown in Fig 18E, the screen returns to the one requesting selection of an animation template (Fig. 18B).

As such, according to the mobile phone of the present modification, the component data representing the components included in the once generated animation data can be utilized to modify the animation template to generate new animation data.

### <Other Operation Example>

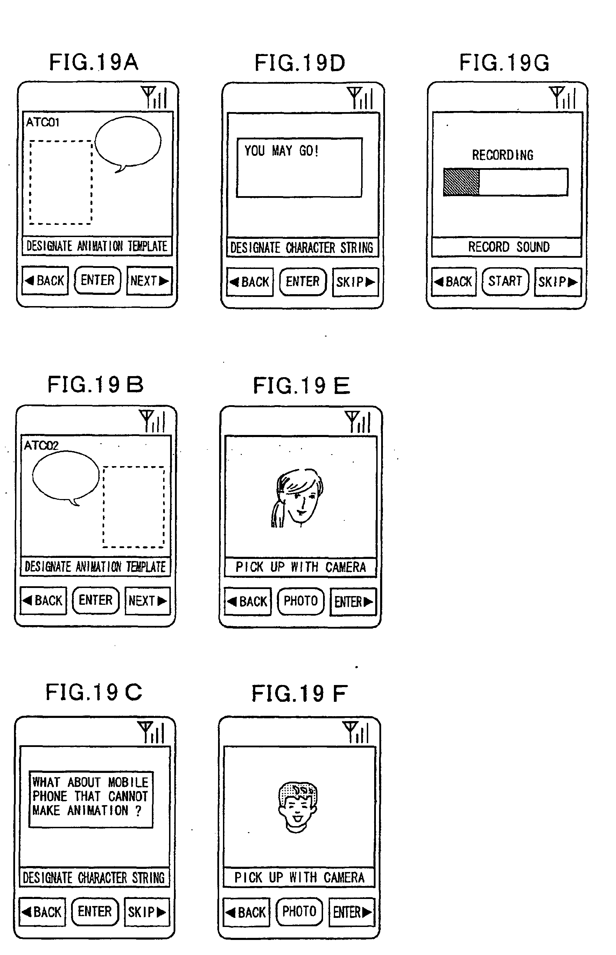

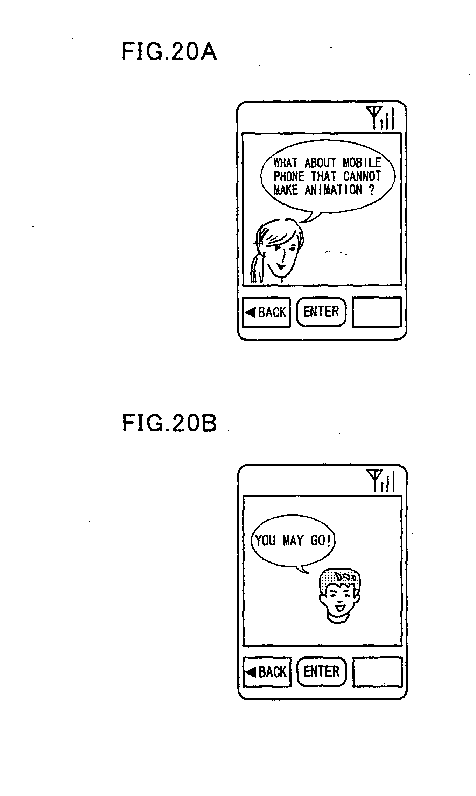

Hereinafter, other operation example of mobile phone 100 of the present invention is described with reference to Figs. 19A-19G, 20A and 20B. The following operation example corresponds to the case when mobile phone 100 of the first embodiment is employed.

When the user of mobile phone 100 inputs a request for generating an animation, the screen shown in Fig. 19A is displayed on display unit 114. At this time, a dot line frame in which an image picked up by camera unit 120 is to be attached and a sound balloon in which a character string is to be displayed are displayed, as shown in Fig. 19A. In another animation template, the animation template corresponding to Fig. 19A is displayed, as shown in Fig. 19B. The two animation templates are designated as the user presses the ENTER key shown in Figs. 19A and 19B.

The character string component to be included in the first-designated animation template "ATC01" is designated by the user, as shown in Fig. 19C. The character string component to be included in the next-designated animation template "ATC02" is designated by the user, as shown in Fig. 19D. When the character string is not to be designated, designation of the character string may be skipped by pressing a predetermined key in operation unit 112 as shown in Figs. 19C and 19D.

A screen for picking up an image to be incorporated in the dot line frame in the first-designated animation template "ATC01" is displayed as shown in Fig. 19E. As shown in Fig. 19F, a screen for displaying an image to be incorporated in the dot line frame of the subsequently designated animation template "ATC02" is displayed. When the user presses the PHOTO key shown in Figs. 19E and 19F, the images to be incorporated in the dot line frames of the respective templates of "ATC01" and "ATC02" are stored. When a sound is to be recorded, as shown in Fig. 19G, the START key in Fig. 19G is pressed to start the recording of the sound. The sound of the user is input from sound input unit 116 and stored in storage unit 106.

Display examples of the animation data thus generated are now explained. With the animation data, the screen corresponding to the initially designated animation template "ATC01" is displayed on display unit 114 as shown in Fig. 20A, and after a lapse of time, the screen corresponding to the subsequently designated animation template is displayed on display unit 114 as shown in Fig. 20B. The recorded sounds are output from sound output unit 118 corresponding to the displays of the respective screens.

As such, it is readily possible to generate an animation using the two animation templates and the images picked up by camera unit 120.

Although it has been described that an animation requested by a user is generated in a mobile phone in each of the above embodiments, the present invention is not restricted thereto. A mobile phone and an animation generating apparatus may communicate with each other via a network, and the user's request received at the mobile phone may be sent to the animation generating apparatus, and the animation may be generated in the animation generating apparatus. As such, the generation of the animation may be performed by the animation generating apparatus, instead of the mobile terminal. With this configuration, it is readily possible to generate an animation requested by a user even if the processing capability for generating an animation is restricted as in the case of the mobile phone.

It should be understood that the embodiments disclosed herein are illustrative and non-restrictive in every respect. The scope of the present invention is defined by the terms of the claims, rather than the description above, and is intended to include any modifications within the scope and meaning equivalent to the terms of the claims.

### Industrial Applicability

As described above, according to the mobile terminal and the animation generating method of the present invention, it is readily possible to generate animation data in accordance with a request of a user. Thus, the animation generating method is suitable for generation of an animation in a mobile phone or the like that is restricted in user interface and/or processing capability.

## Claims

**1.** A mobile terminal (100), comprising:
animation data storage means (106) for storing a plurality of pieces of animation data each including parts data representing a part corresponding to a component constituting an animation and motion data representing motion of said part;
storage means (106) for storing information for modification of said parts data;
display means (114) for displaying the animation based on said animation data;
input means (112) for a user to input information for selecting a first animation requested by the user from among a plurality of said animations displayed on said display means (114);
modification means for modifying the parts data representing the part corresponding to the component of said input first animation based on the information stored in said storage means (106);
generation means connected to said modification means and said animation data storage means (106) for generating second animation data based on said modified parts data and the motion data included in the animation data corresponding to said first animation; and
control means (102) connected to said display means (114) and said generation means for controlling said display means (114) and said generation means to display a second animation based on said generated second animation data.

**2.** A mobile terminal (100), comprising:
animation data storage means (106) for storing a plurality of pieces of animation data each including parts type data representing a type of a part corresponding to a component constituting an animation and motion data representing motion of said part, said motion data defining different motions for different types of said parts;
input means (112) for a user to input parts data representing the part requested by the user;
retrieval means connected to said animation data storage means (106) and said input means (112) for retrieving first animation data from among said plurality of pieces of animation data that includes the parts type data corresponding to the type of the part represented by said input parts data;
generation means (102) connected to said animation data storage means (106), said input means (112) and said retrieval means for generating second animation data based on said input parts data and the motion data included in said first animation data; and
display means (114) connected to said generation means (102) for displaying a second animation based on said generated second animation data.

**3.** A mobile terminal (100), comprising:
animation data storage means (106) for storing a plurality of pieces of animation data each including parts type data representing a type of a part corresponding to a component constituting an animation and motion data representing motion of said part, said motion data defining different motions for different types of said parts;
keyword storage means (106) for storing parts data representing said part and a keyword corresponding to said part;
input means (112) for a user to input the keyword corresponding to the part requested by the user;
first retrieval means connected to said keyword storage means (106) and said input means (112) for retrieving the parts data corresponding to said input keyword;
second retrieval means connected to said animation data storage means (106) and said first retrieval means for retrieving first animation data from among said plurality of pieces of animation data that includes the parts type data corresponding to the type of the part represented by the parts data retrieved by said first retrieval means;
generation means (102) connected to said animation data storage means (106) and said second retrieval means for generating second animation data based on said retrieved parts data and the motion data included in said first animation data; and
display means (114) connected to said generation means (102) for displaying a second animation based on said generated second animation data;

**4.** The mobile terminal (100) according to any of claims 1-3, further comprising parts data modification means (102) for modifying the parts data included in said second animation data.

**5.** The mobile terminal (100) according to any of claims 1-3, further comprising motion data modification means (102) for modifying the motion data included in said second animation data.

**6.** The mobile terminal (100) according to any of claims 1-3, further comprising pick-up means (120) for picking up an image, wherein
said parts data includes data representing said image picked up by said pick-up means.

**7.** The mobile terminal (100) according to any of claims 1-3, further comprising generation means (102) for generating said parts data.

**8.** The mobile terminal (100) according to any of claims 1-3, further comprising generation means (102) for generating said motion data.

**9.** The mobile terminal (100) according to any of claims 1-3, further comprising:
sound storage means (106) for storing a sound; and
sound output means (118) for outputting said sound; wherein
said control means (102) includes means for controlling said display means (114) and said sound output means (118) to output the sound stored in said sound storage means (106) while displaying the second animation based on said generated second animation data.

**10.** The mobile terminal (100) according to claim 9, further comprising sound input means (116) for a user to input a sound to be output with the display of the second animation, wherein
said sound storage means (106) includes means for storing the sound input by said sound input means (116).

**11.** The mobile terminal (100) according to any of claims 1-3, further comprising:
communication means for communicating with another communication apparatus; and
communication control means (102) connected to said communication means for controlling said communication means to send said second animation data to said another communication apparatus.

**12.** The mobile terminal (100) according to any of claims 1-3, wherein said mobile terminal (100) is a mobile phone.

**13.** A method for assisting a user to generate an animation using a mobile terminal, comprising the steps of:
preparing a plurality of pieces of animation data each including parts data representing a part corresponding to a component constituting an animation and motion data representing motion of said part;
preparing information for modification of said parts data;
displaying the animation based on said animation data;
causing a user to input information for selecting a first animation requested by the user from among a plurality of said displayed animations (S106);
modifying the parts data representing the part corresponding to the component of said input first animation based on said prepared information;
generating second animation data based on said modified parts data and the motion data included in the animation data corresponding to said first animation (S116); and
displaying a second animation based on said generated second animation data (S128).

**14.** A method for assisting a user to generate an animation using a mobile terminal, comprising the steps of:
storing a plurality of pieces of animation data each including parts type data representing a type of a part corresponding to a component constituting an animation and motion data representing motion of said part, said motion data defining different motions for different types of said parts;
causing a user to input parts data representing the part requested by the user;
retrieving first animation data from among said plurality of pieces of animation data that includes the parts type data corresponding to the type of the part represented by said input parts data (S202);
generating second animation data based on said input parts data and the motion data included in said first animation data; and
displaying a second animation based on said generated second animation data (S128).

**15.** A method for assisting a user to generate an animation using a mobile terminal, comprising the steps of:
storing a plurality of pieces of animation data each including parts type data representing a type of a part corresponding to a component constituting an animation and motion data representing motion of said part, said motion data defining different motions for different types of said parts;
storing parts data representing said part and a keyword corresponding to said part;
causing a user to input the keyword corresponding to the part requested by the user;
retrieving the parts data corresponding to said input keyword (S254);
retrieving first animation data from among said plurality of pieces of animation data that includes the parts type data corresponding to the type of the part represented by said retrieved parts data (S202);
generating second animation data based on said retrieved parts data and the motion data included in said first animation data; and
displaying a second animation based on said generated second animation data (S128).

**16.** A computer readable recording medium having recorded thereon a program for assisting a user to generate an animation using a computer, said program causing said computer to perform the steps of:
storing a plurality of pieces of animation data each including parts data representing a part corresponding to a component constituting an animation and motion data representing motion of said part;
storing information for modification of said parts data;
displaying the animation based on said animation data;
causing a user to input information for selecting a first animation requested by the user from among a plurality of said displayed animations (S106);
modifying the parts data representing the part corresponding to the component of said input first animation based on said stored information;
generating second animation data based on said modified parts data and the motion data included in the animation data corresponding to said first animation (S116); and
displaying a second animation based on said generated second animation data (S128).

**17.** A computer readable recording medium having recorded thereon a program for assisting a user to generate an animation using a computer, said program causing said computer to perform the steps of:
storing a plurality of pieces of animation data each including parts type data representing a type of a part corresponding to a component constituting an animation and motion data representing motion of said part, said motion data defining different motions for different types of said parts;
causing a user to input parts data representing the part requested by the user;
retrieving first animation data from among said plurality of pieces of animation data that includes the parts type data corresponding to the type of the part represented by said input parts data (S202);
generating second animation data based on said input parts data and the motion data included in said first animation data; and
displaying a second animation based on said generated second animation data (S128).

**18.** A computer readable recording medium having recorded thereon a program for assisting a user to generate an animation using a computer, said program causing said computer to perform the steps of:
storing a plurality of pieces of animation data each including parts type data representing a type of a part corresponding to a component constituting an animation and motion data representing motion of said part, said motion data defining different motions for different types of said parts;
storing parts data representing said part and a keyword corresponding to said part;
causing a user to input the keyword corresponding to the part requested by the user;
retrieving the parts data corresponding to said input keyword (S254);
retrieving first animation data from among said plurality of pieces of animation data that includes the parts type data corresponding to the type of the part represented by said retrieved parts data (S202);
generating second animation data based on said retrieved parts data and the motion data included in said first animation data; and
displaying a second animation based on said generated second animation data (S128).

**19.** A program for assisting a user to generate an animation using a computer, said program causing said computer to perform the steps of:
storing a plurality of pieces of animation data each including parts data representing a part corresponding to a component constituting an animation and motion data representing motion of said part;
storing information for modification of said parts data;
displaying the animation based on said animation data;
causing a user to input information for selecting a first animation requested by the user from among a plurality of said displayed animations (S106);
modifying the parts data representing the part corresponding to the component of said input first animation based on said stored information;
generating second animation data based on said modified parts data and the motion data included in the animation data corresponding to said first animation (S116), and
displaying a second animation based on said generated second animation data (S128).

**20.** A program for assisting a user to generate an animation using a computer, said program causing said computer to perform the steps of:
storing a plurality of pieces of animation data each including parts type data representing a type of a part corresponding to a component constituting an animation and motion data representing motion of said part, said motion data defining different motions for different types of said parts;
causing a user to input parts data representing the part requested by the user;
retrieving first animation data from among said plurality of pieces of animation data that includes the parts type data corresponding to the type of the part represented by said input parts data (S202);
generating second animation data based on said input parts data and the motion data included in said first animation data; and
displaying a second animation based on said generated second animation data (S128).

**21.** A program for assisting a user to generate an animation using a computer, said program causing said computer to perform the steps of:
storing a plurality of pieces of animation data each including parts type data representing a type of a part corresponding to a component constituting an animation and motion data representing motion of said part, said motion data defining different motions for different types of said parts;
storing parts data representing said part and a keyword corresponding to said part;
causing a user to input the keyword corresponding to the part requested by the user;
retrieving the parts data corresponding to said input keyword (S254);
retrieving first animation data from among said plurality of pieces of animation data that includes the parts type data corresponding to the type of the part represented by said retrieved parts data (S202);
generating second animation data based on said retrieved parts data and the motion data included in said first animation data; and
displaying a second animation based on said generated second animation data (S128).

**22.** An animation generating system including a mobile terminal (100) and an animation data generating apparatus,
said mobile terminal (100) comprising:
animation data storage means (106) for storing a plurality of pieces of animation data each including parts data representing a part corresponding to a component constituting an animation and motion data representing motion of said part;
storage means (106) for storing information for modification of said parts data;
display means (114) for displaying the animation based on said animation data;
input means (112) for a user to input information for selecting a first animation requested by the user from among a plurality of said animations displayed on said display means (114);
modification means for modifying the parts data representing the part corresponding to the component of said input first animation based on the information stored in said storage means; and
send means (104) for sending said first animation data and said modified parts data to said animation generating apparatus; and
said animation generating apparatus comprising:
receive means for receiving said first animation data and said modified parts data from said mobile terminal;
generation means for generating second animation data based on said modified parts data and the motion data included in the animation data corresponding to said first animation received from said mobile terminal (100); and
send means (104) for sending said generated second animation to said mobile terminal for display on said display means (114) of said mobile terminal (100).

**23.** An animation generating system including a mobile terminal (100) and an animation data generating apparatus,
said mobile terminal (100) comprising:
animation data storage means (106) for storing a plurality of pieces of animation data each including parts type data representing a type of a part corresponding to a component constituting an animation and motion data representing motion of said part, said motion data defining different motions for different types of said parts;
input means (112) for a user to input parts data representing the part requested by the user;
retrieval means connected to said animation data storage means (106) and said input means (112) for retrieving first animation data from among said plurality of pieces of animation data that includes the parts type data corresponding to the type of the part represented by said input parts data; and
send means (104) for sending said first animation data and said input parts data to said animation generating apparatus; and
said animation generating apparatus comprising:
receive means for receiving said first animation data and said input parts data from said mobile terminal (100);
generation means for generating second animation data based on said input parts data and the motion data included in said first animation data received from said mobile terminal (100); and
send means for sending said generated second animation to said mobile terminal (100) for display on said display means (114) of said mobile terminal (100).

**24.** An animation generating system including a mobile terminal (100) and an animation data generating apparatus,
said mobile terminal (100) comprising:
animation data storage means (106) for storing a plurality of pieces of animation data each including parts type data representing a type of a part corresponding to a component constituting an animation and motion data representing motion of said part, said motion data defining different motions for different types of said parts;
keyword storage means (106) for storing parts data representing said part and a keyword corresponding to said part;
input means (112) for a user to input the keyword corresponding to the part requested by the user;
first retrieval means connected to said keyword storage means (106) and said input means (112) for retrieving the parts data corresponding to said input keyword;
second retrieval means connected to said animation data storage means and said first retrieval means for retrieving first animation data from among said plurality of pieces of animation data that includes the parts type data corresponding to the type of the part represented by the parts data retrieved by said first retrieval means; and
send means (104) for sending said first animation data and said retrieved parts data to said animation generating apparatus; and
said animation generating apparatus comprising:
receive means for receiving said first animation data and said retrieved parts data from said mobile terminal (100);
generation means for generating second animation data based on said retrieved parts data and the motion data included in said first animation data received from said mobile terminal (100); and
send means for sending said generated second animation to said mobile terminal (100) for display on said display means (114) of said mobile terminal (100).
